(19) Europäisches Patentamt
European Patent Office
Office européen des brevets

(11) Veröffentlichungsnummer: **0 052 825**
**B1**

# (12) EUROPÄISCHE PATENTSCHRIFT

(45) Veröffentlichungstag der Patentschrift: **22.02.84**

(51) Int. Cl.$^3$: **A 01 N 43/64**

(21) Anmeldenummer: **81109564.5**

(22) Anmeldetag: **07.11.81**

## (54) Selektiv-herbizide Mittel auf Triazindion-Basis.

(30) Priorität: **21.11.80 DE 3043977**
**15.07.81 DE 3127861**

(43) Veröffentlichungstag der Anmeldung:
**02.06.82 Patentblatt 82/22**

(45) Bekanntmachung des Hinweises auf die Patenterteilung:
**22.02.84 Patentblatt 84/8**

(84) Benannte Vertragsstaaten:
**AT BE CH DE FR GB IT LI NL SE**

(56) Entgegenhaltungen:
**DK - A - 136 067**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Schmidt, Robert, Dr., Im Waldwinkel 110, D-5060 Bergisch-Gladbach 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

## Selektiv-herbizide Mittel auf Triazindion-Basis

Die Erfindung betrifft neue herbizide synergistische Wirkstoffkombinationen, die aus einem bekannten Triazindion einerseits und aus bestimmten herbiziden Wirkstoffen aus der Gruppe der bekannten Getreideherbizide andererseits bestehen und mit Vorteil zur selektiven Unkrautbekämpfung, vorzugsweise in Getreidekulturen, verwendet werden können.

Es ist bereits bekannt geworden, daß 1-Amino-3-(2,2-dimethylpropyl)-6-ethylthio-1,3,5-triazin-2,4(1 H, 3 H)-dion als Herbizid verwendet werden kann (vgl. z. B. DK-PS 136 067).

Ferner ist bekannt, daß die nachfolgend genannten Wirkstoffe als Getreideherbizide verwendet werden können (vgl. z. B. Chemie der Pflanzenschutz- und Schädlingsbekämpfungsmittel, Band 5 »Herbizide«, Springer-Verlag 1877):

bestimmte Harnstoffe wie z. B. Chlortoluron, Isoproturon, Linuron, Methabenzthiazuron und Metoxuron sowie bestimmte Benzonitrile wie z. B. Bromoxynil und Ioxynil.

Die vorgenannten (durch ihre »common names« bezeichneten) Wirkstoffe zeigen zwar eine gute Verträglichkeit in Getreide-Kulturen, z. B. in Weizen und Gerste, weisen aber gegen wichtige Unkräuter und Gräser gewisse Schwächen auf.

Es wurde nun überraschend gefunden, daß die neuen Wirkstoffkombinationen bestehend aus

(I) 1-Amino-3-(2,2-dimethylpropyl)-6-ethylthio-1,3,5-triazin-2,4(1 H,3 H)-dion der Formel

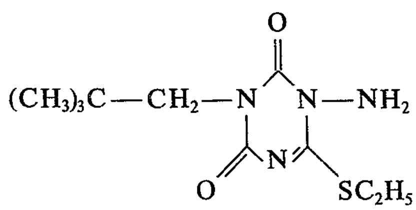

(I)

und

(II) einem der nachfolgend genannten Wirkstoffe aus der Gruppe der Getreideherbizide, entweder

(1) einem der folgenden Harnstoffe:

(a) N'-(3-Chlor-4-methylphenyl)-N,N-dimethylharnstoff (Chlortoluron) (1a),
(b) N'-(4-Isopropylphenyl)-N,N-dimethylharnstoff (Isoproturon) (1b),
(c) N'-(3,4-Dichlorphenyl)-N-methoxy-N-methylharnstoff (Linuron) (1c),
(d) N-Benzthiazol-2-yl-N-methyl-N'-methylharnstoff (Methabenzthiazuron) (1d) oder
(e) N'-(3-Chlor-4-methoxyphenyl)-N,N-dimethylharnstoff (Metoxuron) (1e);

oder

(2) einem der folgenden Benzonitrile:

(a) 3,5-Dijodo-4-hydroxy-benzonitril (Ioxynil) (2a)

oder

(b) 3,5-Dibrom-4-hydroxy-benzonitril (Bromoxynil) (2b)

eine besonders breite herbizide Wirksamkeit in verschiedenen Kulturen, insbesondere in Getreidekulturen, aufweisen.

Überraschenderweise ist die Wirksamkeit der erfindungsgemäßen Wirkstoffkombinationen wesentlich höher als die Summe der Wirkungen der einzelnen Wirkstoffe. Es liegt ein nicht vorhersehbarer echter synergistischer Effekt vor und nicht nur eine Wirkungsergänzung. Die neuen Wirkstoffkombinationen stellen somit eine wertvolle Bereicherung der Selektivherbizide, insbesondere der Getreideherbizide, dar.

Als Unkräuter, die im allgemeinen als Verunreinigung in Getreidekulturen auftreten und durch die erfindungsgemäßen Wirkstoffkombinationen sicher bekämpft werden, seien beispielsweise genannt:

dikotyle Unkräuter der Gattungen:

Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea; sowie

monokotyle Unkräuter der Gattungen:

Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.

Die Verwendung der erfindungsgemäßen Wirkstoffkombinationen ist jedoch keineswegs auf diese Gattungen beschränkt, sondern erstreckt sich in gleicher Weise auch auf andere Pflanzen.

Besonders gut eignen sich die neuen Wirkstoffkombinationen zur Unkrautbekämpfung in den Getreidearten Weizen und Gerste.

Der synergistische Effekt der erfindungsgemäßen Wirkstoffkombinationen ist bei bestimmten Konzentrationsverhältnissen besonders stark ausgeprägt. Jedoch können die Gewichtsverhältnisse der Wirkstoffe in den Wirkstoffkombinationen in relativ großen Bereichen variiert werden. Im allgemeinen entfallen auf 1 Gewichtsteil Wirkstoff der Formel (I) 0,5—10 Gewichtsteile, vorzugsweise 0,5—5 Gewichtsteile Wirkstoff aus der Wirkstoffgruppe (II).

Die erfindungsgemäßen Wirkstoffkombinationen können in die üblichen Formulierungen übergeführt werden, wie Lösungen, Emulsionen, Spritzpulver, Suspensionen, Pulver, Stäubemittel, Pasten, lösliche Pulver, Granulate, Suspensions-Emulsionskonzentrate, Wirkstoff-imprägnierte Natur- und synthetische Stoffe, Feinstverkapselungen in polymeren Stoffen.

Diese Formulierungen werden in bekannter Weise hergestellt, z. B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmitteln können z. B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z. B. Erdölfraktionen, Alkohole, wie Butanol oder Glykol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage: z. B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z. B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage: z. B. nichtionogene und anionische Emulgatoren, wie Polyoxyethylen-Fettsäure-Ester, Polyoxyethylen-Fettalkohol-Ether, z. B. Alkylarylpolyglykol-ether, Alkylsulfonate, Alkylsulfate, Arylsulfonate sowie Eiweißhydrolysate; als Dispergiermittel kommen in Frage: z. B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

In den Formulierungen können als weitere Zusätze Farbstoffe wie anorganische Pigmente, zum Beispiel Eisenoxid, Titanoxid, Ferrocyanblau und organische Farbstoffe, wie Alizarin-, Azo-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoffkombination, vorzugsweise zwischen 0,5 und 90%.

Die erfindungsgemäßen Wirkstoffkombinationen werden im allgemeinen in Form von Fertigformulierungen zur Anwendung gebracht. Die in den Wirkstoffkombinationen enthaltenen Wirkstoffe können aber auch als Einzelformulierungen bei der Anwendung gemischt, d. h. in Form von Tankmischungen zur Anwendung gebracht werden.

Die neuen Wirkstoffkombinationen können als solche oder in ihren Formulierungen weiterhin auch in Mischung mit anderen bekannten Getreide-Herbiziden Verwendung finden, wobei wiederum Fertigformulierungen oder Tankmischungen möglich sind. Auch eine Mischung mit anderen bekannten Wirkstoffen, wie Fungiziden, Insektiziden, Akariziden, Nematiziden, Schutzstoffen gegen Vogelfraß, Wuchsstoffen, Pflanzennährstoffen und Bodenstrukturverbesserungsmitteln ist möglich.

Die neuen Wirkstoffkombinationen können als solche, in Form ihrer Formulierungen oder der daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z. B. durch Gießen, Spritzen, Sprühen, Stäuben oder Streuen.

Die Aufwandmengen der erfindungsgemäßen Wirkstoffkombination können in einem gewissen Bereich variiert werden; sie hängen u. a. vom Wetter und von den Bodenfaktoren ab. Im allgemeinen liegen die Aufwandmengen zwischen 0,2 und 8 kg Wirkstoffkombination pro ha, vorzugsweise zwischen

0,5 und 5 kg/ha.

Die erfindungsgemäßen Wirkstoffkombinationen können sowohl vor als auch nach dem Auflaufen der Pfanzen appliziert werden. Sie können auch vor der Saat in den Boden eingearbeitet werden.

Die gute herbizide Wirkung der neuen Wirkstoffkombinationen geht aus den nachfolgenden Beispielen hervor. Während die einzelnen Wirkstoffe in der herbiziden Wirkung Schwächen aufweisen, zeigen die Kombinationen eine sehr breite Unkrautwirkung, die über eine einfache Wirkungssummierung hinausgeht.

Ein synergistischer Effekt liegt bei Herbiziden immer dann vor, wenn die herbizide Wirkung der Wirkstoffkombination größer ist als die der einzeln applizierten Wirkstoffe.

Die zu erwartende Wirkung für eine gegebene Kombination zweier Herbizide kann wie folgt berechnet werden (vgl. Colby, S. R., »Calculating synergistic and antagonistic responses of herbicide combinations«, Weeds 15, Seiten 20–22, 1967):

Wenn

X = % Schädigung durch Herbizid A bei p kg/ha Aufwandmenge und
Y = % Schädigung durch Herbizid B bei q kg/ha Aufwandmenge und
E = die erwartete Schädigung der Herbizide A und B, bei p und q kg/ha Aufwandmenge,

dann ist $E = X + Y - \frac{X \cdot Y}{100}$.

Ist die tatsächliche Schädigung größer als berechnet, so ist die Kombination in ihrer Wirkung überadditiv, d. h. sie zeigt einen synergistischen Effekt.

Aus den nachfolgenden Beispielen geht hervor, daß die gefundene herbizide Wirkung der erfindungsgemäßen Wirkstoffkombinationen bei den Unkräutern größer ist als die berechnete, d. h. es liegt ein echter synergistischer Effekt vor.

## Beispiel A

Pre-emergence-Test

Lösungsmittel: 5 Gewichtsteile Aceton
Emulgator: 1 Gewichtsteil Alkylarylpolyglycolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Samen der Testpflanzen werden in normalen Boden ausgesät und nach 24 Stunden mit der Wirkstoffzubereitung begossen. Dabei hält man die Wassermenge pro Flächeneinheit zweckmäßigerweise konstant. Die Wirkstoffkonzentration in der Zubereitung spielt keine Rolle, entscheidend ist nur die Aufwandmenge des Wirkstoffs pro Flächeneinheit. Nach drei Wochen wird der Schädigungsgrad der Pflanzen bonitiert in % Schädigung im Vergleich zur Entwicklung der unbehandelten Kontrolle. Es bedeuten:

0% = keine Wirkung (wie unbehandelte Kontrolle)
100% = totale Vernichtung

Wirkstoffe, Anwendmengen und Resultate gehen aus der nachfolgenden Tabelle hervor:

Tabelle A

Pre-emergence-Test/Gewächshaus

| Wirkstoff bzw. Wirkstoffkombination | Aufwandmenge kg/ha | Schädigung bzw. Wirkung in % Avena fatua gef.* | ber.* | Winterweizen gef.* | ber.* | Wintergerste gef.* | ber.* |
|---|---|---|---|---|---|---|---|
| (I) | 1 | 80 | | 0 | | 0 | |
| bekannt | 2 | 95 | | 0 | | 0 | |
| (1d) | 1 | 0 | | 0 | | 0 | |

Fortsetzung

| Wirkstoff bzw. Wirkstoffkombination | Aufwandmenge kg/ha | Schädigung bzw. Wirkung in % Avena fatua gef.* | ber.* | Winterweizen gef.* | ber.* | Wintergerste gef.* | ber.* |
|---|---|---|---|---|---|---|---|
| bekannt | 2 | 10 | | 0 | | 0 | |
| (I) + (1d) | 1 + 1 = 2 | 100 | 80 | 0 | 0 | 0 | 0 |
| erfindungsgemäß | 1 + 2 = 3 | 100 | 82 | 0 | 0 | 0 | 0 |
| | 2 + 1 = 3 | 100 | 95 | 0 | 0 | 0 | 0 |

*gef. = gefundene Schädigung (in Prozent)
*ber. = nach der Colby-Formel berechnete Schädigung (in Prozent)
(I) = 1-Amino-3-(2,2-dimethylpropyl)-6-ethylthio-1,3,5-triazin-2,4(1 H,3 H)-dion
(1d) = N-Benzthiazol-2-yl-N-methyl-N'methylharnstoff(Methabenzthiazuron)

## Beispiel B

Post-emergence-Test

Lösungsmittel: 5 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Mit der Wirkstoffzubereitung spritzt man Testpflanzen, welche eine Höhe von 5–15 cm haben so, daß die in der Tabelle angegebenen Wirkstoffmengen pro Flächeneinheit ausgebracht werden.

Die Wasseraufwandmenge beträgt 2000 l/ha. Nach drei Wochen wird der Schädigungsgrad der Pflanzen bonitiert in % Schädigung im Vergleich zur Entwicklung der unbehandelten Kontrolle.

Es bedeuten:

0% = keine Wirkung (wie unbehandelte Kontrolle)
100% = totale Vernichtung

Wirkstoffe, Aufwandmengen und Resultate gehen aus der nachfolgenden Tabelle hervor:

Tabelle B

Post-emergence-Test/Gewächshaus

| Wirkstoff- bzw. Wirkstoffkombination | Aufwandmenge kg/ha | Schädigung bzw. Wirkung in % Avena fatua gef.* | ber.* | Winterweizen gef.* | ber.* | Wintergerste gef.* | ber.* |
|---|---|---|---|---|---|---|---|
| (I) | 1 | 70 | | 0 | | 0 | |
| bekannt | 2 | 80 | | 0 | | 0 | |
| (1a) | 1 | 55 | | 0 | | 0 | |
| bekannt | 2 | 95 | | 5 | | 5 | |
| (I) + (1a) | 1 + 1 = 2 | 100 | 86,5 | 0 | 0 | 0 | 0 |

Fortsetzung

| Wirkstoff- bzw. Wirkstoffkombination | Aufwandmenge kg/ha | Schädigung bzw. Wirkung in % Avena fatua gef.* | ber.* | Winterweizen gef.* | ber.* | Wintergerste gef.* | ber.* |
|---|---|---|---|---|---|---|---|
| erfindungsgemäß | 1 + 2 = 3 | 100 | 98,5 | 0 | 5 | 0 | 5 |
| | 2 + 1 = 3 | 100 | 91 | 0 | 0 | 0 | 0 |

*gef. = gefundene Schädigung (in Prozent)
*ber. = nach der Colby-Formel berechnete Schädigung (in Prozent)
(1a) = N'-(3-Chlor-4-methylphenyl)-N,N-dimethylharnstoff (Chlortoluron)

**Patentansprüche**

1. Selektiv-herbizide Mittel, gekennzeichnet durch einen Gehalt an einer Wirkstoffkombination bestehend aus

(I) 1-Amino-3-(2,2-dimethylpropyl)-6-ethylthio-1,3,5-triazin-2,4(1 H,3 H)-dion der Formel

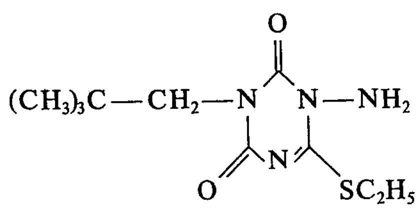

(I)

und

(II) einem der nachfolgend genannten Wirkstoffe aus der Gruppe der Getreideherbizide, entweder

(1) einem der folgenden Harnstoffe:

(a) N'-(3-Chlor-4-methylphenyl)-N,N-dimethylharnstoff (Chlortoluron) (1a),
(b) N'-(4-Isopropylphenyl)-N,N-dimethylharnstoff (Isoproturon) (1b),
(c) N'-(3,4-Dichlorphenyl)-N-methoxy-N-methylharnstoff (Linuron) (1c),
(d) N-Benzthiazol-2-yl-N-methyl-N'-methylharnstoff (Methabenzthiazuron) (1d) oder
(e) N'-(3-Chlor-4-methoxyphenyl)-N,N-dimethylharnstoff (Metoxuron) (1e);

oder

(2) einem der folgenden Benzonitrile:

(a) 3,5-Dijodo-4-hydroxy-benzonitril (Ioxynil) (2a)

oder

(b) 3,5-Dibrom-4-hydroxy-benzonitril (Bromoxynil) (2b)

2. Selektiv-herbizide Mittel gemäß Anspruch 1, dadurch gekennzeichnet, daß in den Wirkstoffkombinationen das Gewichtsverhältnis von Wirkstoff der Formel (I) zu dem Wirkstoff aus der Gruppe (II) zwischen 1 : 0,5 und 1 : 10, vorzugsweise zwischen 1 : 0,5 und 1 : 5 liegt.

3. Verfahren zur selektiven Bekämpfung von Unkraut in Getreidekulturen, dadurch gekennzeichnet, daß man eine Wirkstoffkombination gemäß Anspruch 1 vor oder nach dem Auflaufen der Pflanzen auf die Getreidefelder einwirken läßt.

4. Verwendung von Wirkstoffkombinationen gemäß Anspruch 1 zur selektiven Bekämpfung von Unkraut in Getreidekulturen.

5. Verfahren zur Herstellung von selektiv-herbiziden Mitteln, dadurch gekennzeichnet, daß man eine Wirkstoffkombination gemäß Anspruch 1 mit Streckmitteln und/oder oberflächenaktiven Mitteln vermischt.

## Claims

1. Selective herbicidal agents, characterised in that they contain an active compound combination consisting of

(I) 1-amino-3-(2,2-dimethylpropyl)-6-ethylthio-1,3,5-triazine-2,4(1 H,3 H)-dione of the formula

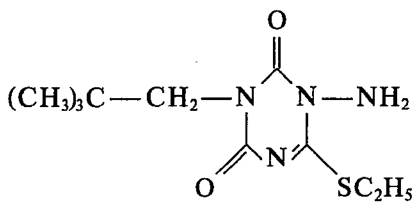

(I)

and

(II) one of the active compounds mentioned below from the cereal herbicide group, that is to say either

(1) one of the following ureas:

(a) N'-(3-chloro-4-methylphenyl)-N,N-dimethylurea (chlorotoluron) (1a),
(b) N'-(4-isopropylphenyl)-N,N-dimethylurea (isoproturon) (1b),
(c) N'-(3,4-dichlorophenyl)-N-methoxy-N-methylurea (linuron) (1c),
(d) N-benzothiazol-2-yl-N-methyl-N'-methylurea (methabenzthiazuron) (1d) or
(e) N'-(3-chloro-4-methoxyphenyl)-N,N-dimethylurea (metoxuron) (1e);

or

(2) one of the following benzonitriles:

(a) 3,5-diiodo-4-hydroxy-benzonitrile (ioxynil) (2a) or
(b) 3,5-dibromo-4-hydroxy-benzonitrile (bromoxynil) (2b).

2. Selective herbicidal agents according to Claim 1, characterised in that the weight ratio of active compound of the formula (I) to the active compound from the group (II) in the active compound combinations is between 1 : 0.5 and 1 : 10, preferably between 1 : 0.5 and 1 : 5.

3. Process for selectively combating weeds in cereal crops, characterised in that an active compound combination according to Claim 1 is allowed to act on the cereal fields before or after emergence of the plants.

4. Use of active compound combinations according to Claim 1 for selectively combating weeds in cereal crops.

5. Process for the preparation of selective herbicidal agents, characterised in that an active compound combination according to Claim 1 is mixed with extenders and/or surface-active agents.

## Revendications

1. Agent herbicide sélectif, caractérisé par une teneur en une combinaison de substances actives consistant en

(I) la 1-amino-3-(2,2-diméthylpropyl)-6-éthylthio-1,3,5-triazine-2,4-(1 H,3 H)-dione de formule:

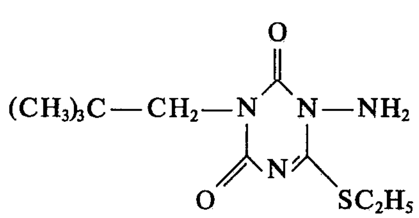

(I)

et

(II) l'une des substances actives citées ci-après, du groupe des herbicides de protection des céréales, qui est:

(1) l'une des urées suivantes:

(a) la N'-(3-chloro-4-méthylphényl)-N,N-diméthylurée (chlortoluron) (1a),
(b) la N'-(4-isopropylphényl)-N,N-diméthylurée (isoproturon) (1b),
(c) la N'-(3,4-dichlorophényl)-N-méthoxy-N-méthylurée (linuron) (1c),
(d) la N-benzothiazol-2-yl-N-méthyl-N'-méthylurée (méthabenzthiazuron) (1d) ou
(e) la N'-(3-chloro-4-méthoxyphényl)-N,N-diméthylurée (métoxuron) (1e);

ou

(2) l'un des benzonitriles suivants:

(a) le 3,5-diodo-4-hydroxy-benzonitrile (ioxynil) (2a) ou
(b) le 3,5-dibromo-4-hydroxy-benzonitrile (bromoxynil) (2b).

2. Agent herbicide sélectif selon la revendication 1, caractérisé en ce que, dans les combinaisons de substances actives, le rapport pondéral de la substance active de formule (I) par rapport à la substance active du groupe (II) se situe entre 1 : 0,5 et 1 : 10, avantageusement entre 1 : 0,5 et 1 : 5.

3. Procédé de lutte sélective contre les mauvaises herbes dans des cultures de céréales, caractérisé en ce qu'on fait agir sur les champs de céréales avant ou après la levée des plantes une combinaison de substances actives selon la revendication 1.

4. Application des combinaisons de substances actives selon la revendication 1 à la lutte sélective contre les mauvaises herbes dans des cultures de céréales.

5. Procédé de préparation d'agents herbicides sélectifs, caractérisé en ce qu'on mélange une combinaison de substances actives selon la revendication 1 avec des agents d'allongement et/ou avec des agents surfactifs.